# EUROPEAN PATENT SPECIFICATION

(11) **EP 2 457 715 B1**
(45) Date of publication and mention of the grant of the patent: **23.10.2013**
(21) Application number: 11190225.0
(22) Date of filing: 23.11.2011
(51) Int. Cl.: B29C 51/40, B29C 51/36, B29C 51/10, B29C 51/42

(54) **Method for molding thermoformable panels and mold for its implementation**
Verfahren zum Formen thermoformbarer Paneele sowie entsprechendes Formwerkzeug
Procédé pour former des panneaux thermoformables et moule correspondante

(30) Priority: 24.11.2010 IT GE20100129
(43) Date of publication of application: 30.05.2012
(73) Proprietor: Persico S.p.A., 24027 Nembro (BG) (IT)
(72) Inventor: Ambrosini Paolo, 24021 Albino (BG) (IT)
(74) Representative: Ferroni, Filippo

(56) References cited:
- WO-A1-03/068612
- US-A- 5 802 816
- ANONYMOUS: "New mould concept and in-mold graining process for skins", RESEARCH DISCLOSURE, MASON PUBLICATIONS, HAMPSHIRE, GB, vol. 478, no. 92, 1 February 2004 (2004-02-01), XP007133446, ISSN: 0374-4353

## Description

The present invention refers to a method and a mould for moulding panels in thermoformable material.

Before proceeding further it is appropriate to specify that in this description and the subsequent claims, the term "thermoformable" is intended to indicate generically those materials, preferably but not exclusively polymeric, which have characteristics of hot formability.

Furthermore, the panels considered herein can be either of simple type, that is to say made up of a single thermoformable layer, or composites which therefore comprise more overlapping layers including layers different from each other.

In the case of polymeric materials, thermoformability must be understood in a broad sense to cover both thermoplastic materials, i.e. those which retain their properties of formability even once they are moulded and can therefore be melted to mould them again, and thermosetting materials which therefore cannot be reused once they are moulded.

Moulding thermoformable panels is a technique which is now consolidated and used in the production of components destined for use in the most varied fields, among them the automotive sector; each improvement in this technique, in view of its extensive use, is therefore to be considered interesting from the industrial point of view.

For this reason one tries to obtain finished pieces from moulding, that will not require further finishing processes, so as to contain the costs of production, which are heavily impacted by the costs of tooling for moulding.

In view of complexity of the pieces produced with this technique and the strict quality requirements demanded, it is understandable that it is not simple to reconcile the various needs of production.

In fact, the production of pieces in thermoformable material with a complex shape, like those that make up the dashboards or the interiors of cars, requires a considerable planning effort to ensure that the air is correctly eliminated from the mould during the production process, so as to avoid the presence of defects due to air bubbles and similar with a consequent increase in production wastage.

This problem is disclosed in patent WO 2005/108039 A1 in the name of Cathcart et al., wherein a method of moulding is described which specifies the use of a mould on whose inner wall is formed a network of channels, with vents located in the upper part of the mould; this method, however, is affected by drawbacks, one of which is the presence of raised parts on the surface of the moulded piece, corresponding to the air vent channels and due to the fact that the material used, a polyurethane foam, fills the channels during the process.

This method is not applicable to thermoformable panels because the presence of the aforesaid raised parts is not compatible with the aesthetic finishing of the panels; besides, if it were possible to eliminate these raised parts, that would necessitate further processing of the piece, with an increase in costs and an extension of production times.

This is even more important in the case of pieces with special finishes, such as those with the so-called "goffering", that is to say, a surface on which incisions are imprinted to simulate the appearance of materials such as leather, veneer, wood and so forth.

This finish is obtained by means of moulds that have a certain surface roughness on the inner wall, to which the moulded piece adheres: the roughness leaves a corresponding trace on the surface of the piece, which then has a typical finish with incisions providingt the "goffered" aspect to the piece.

A problem that occurs in moulding these pieces, consists in the evacuation of the air since, as explained above, solutions such as those in document WO2005/108039 are not compatible with the production of thermoformable panels.

Attempts in providing evacuation of the air from the cavity of moulds for panels, are disclosed in American patent US 5,802,816 and international patent application WO 03/068612.

Therefore, in the light of the foregoing, the technical problem underlying the present invention is to provide a method of moulding thermoformable panels, having such operating features as to overcome the drawbacks faced in the state of the art.

Such a problem is solved by a method whose operating steps are stated in the attached claims.

The idea for solving this problem consists in providing channels in the mould for evacuating the air, such that they will not be filled by the material of the thermoformable panels when it is moulded, thereby making it possible to ensure a way out for the air.

The present invention includes also a mould with features suitable for carrying out the above method; these features are set forth in the claims which follow. Further advantageous characteristics of the present invention will become more apparent from the description of an embodiment thereof shown in the attached drawings, provided by way of non-limiting example, wherein:
figures 1a, 1b, 1c, and 1d illustrate schematically the steps of moulding a thermoformable panel with the method of the invention;
fig. 2 illustrates a sectional view of the mould shown in the preceding drawings la-1d;
figures 3a, 3b and 3c illustrate the detail A (highlighted in fig. 2) of the mould according to the invention, during the moulding steps;

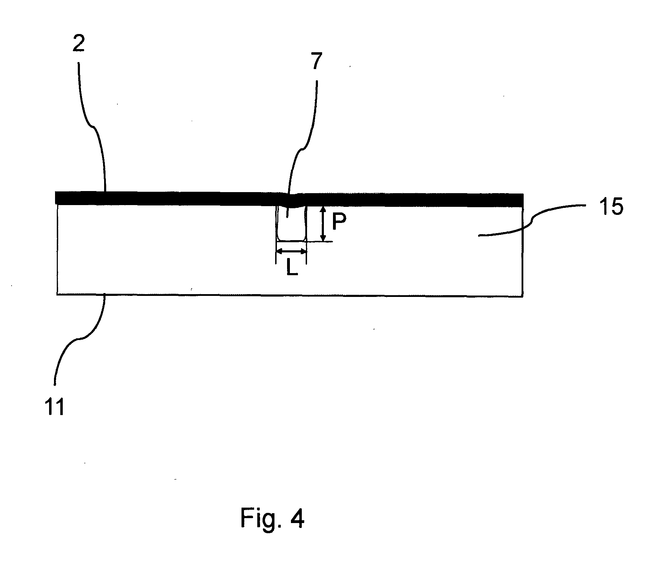

fig. 4 illustrates a cross sectional view of the detail A of the mould through the line IV-IV of fig. 3a.

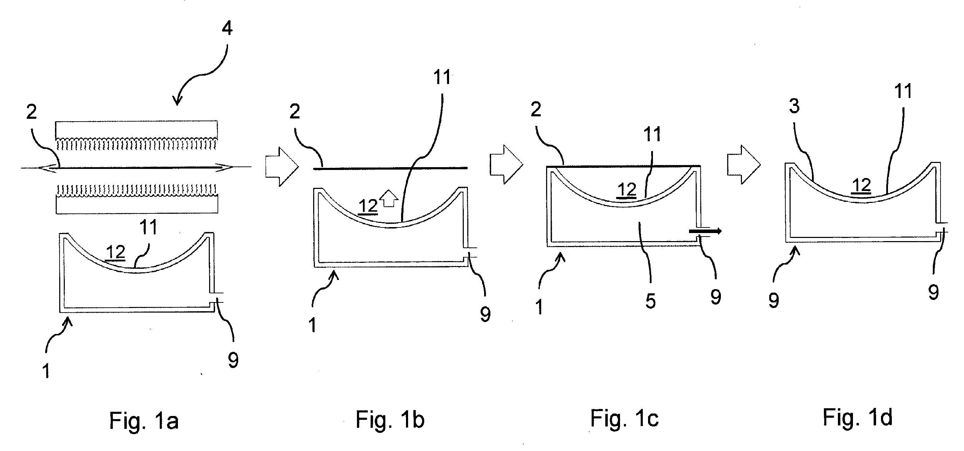

With reference to figures 1a-1d, there will now follow a brief description of the method of moulding goffered panels according to the present invention; as may be seen, this method comprises generally the following steps:
- heating a multi-layer panel 2 (fig. 1a) of thermoformable plastic material, by means of a heater 4; the latter may be of known type for these applications, for example an electric or radiant heater;
- setting up the panel 2 over a mould 1, in which an innner wall 11 defines a cavity 12, connecting it onto the mould to form a seal so as to prevent the passage of air from a surrounding environment towards the inside of the cavity 12;
- evacuating the air (fig. 1c) contained in the cavity 12, so as to deform the panel 2 and model it according to the wall of the mould into a finished piece 3: the evacuation occurs through at least one first and one second aspiration duct 6, 9, present respectively in the wall 11 and in the body 5 of the mould 1, connected to each other and wherein the second duct communicates with a vacuum pump (not illustrated in the drawings) capable of generating a vacuum pressure of 0.01-1.93 mbar, preferably of 0.96-0.98 mbar;
- finally forming the piece 3, letting it cool and removing it from the mould (fig. 1d).

In accordance with the present invention, the step of evacuating the air is carried out with the aid of capillary passages 7 formed on the inner wall 11 of the mould, having a width L and a depth P of the order of a few hundredths of a millimetre, preferably from 0.01 to 0.2 millimetres; preferably the depth P is greater than the width L.

The dimensions and the number of these capillar passages will depend on factors such as the shape and dimensions of the mould, the type of thermoformable material to be moulded, goffering the surface of the piece etc; they give rise to a network of communicating channels, which convey the air towards the first evacuation duct 6.

It should be pointed out that in accordance with a preferred .embodiment, the capillary passages 7 are obtained by ablation with a laser beam of the inner wall 11 of the mould; with this technology it is possible in fact to make a narrow and precise incision in the material of the mould, even in the case of curved surfaces, recesses and surface irregularities.

In the sequence shown in figures 1a-1d, for simplicity the upper closing part of the mould (also called "counter-mould" or "male" by those skilled in the art) is not shown at all; it must however be understood to be provided and is anyway of known type, so that for its configuration reference may be made to existing examples, which serve to keep the flat panel 2 pressed to form a seal against the mould 1. An example of these upper parts of the mould is described in European patent application No. 09175057.0, filed in the name of the same applicant as the present case.

Unless otherwise specified, therefore, the term "mould" will be used in this description and the subsequent claims to refer briefly to the lower part of the mould, to which panel 3 adheres; the explanation here given may however be extended also to refer to the upper part, if the conditions for this occur.

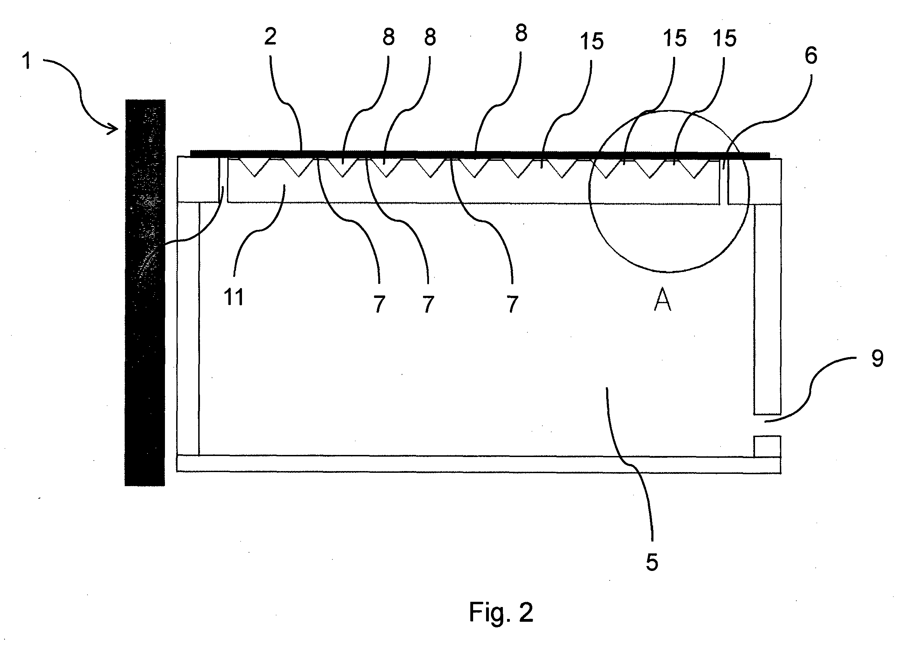

In fig. 2 it is possible to see more clearly in section the mould I which is the subject of the present invention, whose inner wall 11 delimits a chamber 5 which is in fluid communication with at least one first aspiration duct 6, passing into the wall 5: the aspiration duct 6 is further connected to a second exhaust duct 9, present in the body 5 of the mould.

The mould I is used for making goffered panels and to this end its wall 11 comprises ribs 15 interspersed with incisions 8, which are put into fluid communication with each other and/or with the first aspiration duct 6 by means of capillary passages 7. This allows evacuation of the air from mould 1: in particular the air can exit during moulding along incisions 8, which are not in general communicating with each other; it is the capillary passages 7 which perform this function and in fact represent a channel which extends transversely to the ribs 15, at the top of the latter.

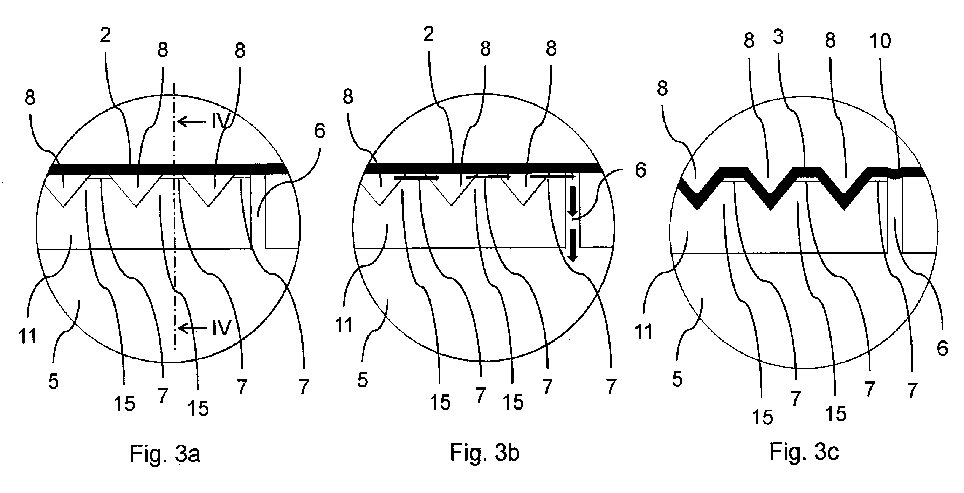

As may be seen in figures 3a, 3b and 3c, incisions 8 are arranged regularly on the panel 2 and the ribs 15 may have various shapes (including geometrical such as truncated pyramids, truncated cones, spherical caps etc.), depending on the goffering effect which it is desired to create on the piece to be moulded; in the circumstances it should be pointed out that the finished piece 3 can have a surface appearance capable of recreating a particular visual and/or tactile effect (e.g. imitation leather, briar root etc.).

When the flat panel 2 is heated, the thermoformable material from which it is formed passes from a rigid or solid state to a plastic or deformable state, suitable for being subjected to the moulding process.

The latter process is performed by creating a depression in the chamber 12 of the mould, by aspirating the air which is present therein from the ducts 6; this depression results in the heated panel 2 being deformed and adhering to inner wall 11.

In this condition the capillary passages 7 allow the air contained in the mould to exit, advantageously putting the interstices 8 in fluid communication with the first duct 6; as above disclosed, this aspiration duct 6 is connected to the exhaust duct 9 which in turn is connected to a vacuum pump (not illustrated in the drawings).

The vacuum pump is of conventional type, i.e. capable of generating a vacuum pressure of 0.01-1.93 mbar, preferably of 0.96-0.98 mbar: in this way the difference in pressure, which is created between the outside of mould 1 (normally atmospheric pressure of 1013.25 mbar) and chamber 5, generates a force which homogeneously flattens the panel 2 against the mould 1, allowing the formation of a finished piece 3 of the desired form.

From the explanation given so far it may be understood that the method according to the present invention solves the technical problem underlying it.

Indeed, as explained above, the thermoforming process of the flat panel 2 is carried out properly because the air is efficiently evacuated from the mould, thanks to the network of capillary passages 7: these convey the air towards the first evacuation duct (or ducts) 6, the number of which can be minimal compared with the vents normally used in known moulds, and whose position can be distanced with respect to the surface of the piece to be moulded.

In this way there are no marks generated on the thermoformable material due to the presence of the exhaust duct, requiring removal later by subsequent processing.

The air thus does not form bubbles which can obstruct the forming of the panel, which adheres perfectly to the inner wall 11 of the mould 1; this does not however prevent the air from flowing into the capillary passages 7, which have dimensions such that they are not obstructed by the thermoformable material of the panel.

In this context the fact of having depth P greater than width L enables a part of the section of the capillary passages to be kept free, because the thermoformable material does not penetrate sufficiently to obstruct it completely.

These dimensions are furthermore sufficiently small that no visible marks are left on the surface of the finished piece 3; in this context it should be noted that the capillary passages 7 are formed on the tops of the ribs 15 and thus represent a small incision by comparison with the interstices 8 which are present between them, and may thus be confused with said interstices.

Therefore the method of the invention is particularly suitable for moulding goffered pieces.

Naturally, variants of the invention are possible from what has been described herein before.

First of all, as mentioned above, mould 1 may be provided with an upper part on which capillaries 7 are created; in other words, a mould can be envisaged for the formation of hollow pieces, or a mould like the one in the drawings, but inverted with respect to the configuration shown.

From a process point of view, it should also be emphasised that for the deformation of panel 2 which is initially flat, there must be a pressure differential between the cavity 12 inside the mould and the side of the panel facing away from it; in the example described, this pressure differential is obtained by creating a vacuum in the cavity; however, it is possible to achieve the same result without making a vacuum but instead by applying an overpressure on the outer side of panel 2, i.e. the side facing outwards with reference to figures 1a-1d attached.

In this case, too, it will be necessary to evacuate the air from cavity 12 but without reaching a vacuum within it.

Furthermore, for panels moulded with the method of the invention, it will be possible to have simple panels, i.e. made up of a single layer, and composite or multi-layer panels, with various thicknesses, and similarly the thermoformable materials used can change from one application to another.

All these variants, however, fall within the scope of the following claims.

## Claims

1. Method for moulding panels (2) of thermoformable material, comprising the steps of:
- heating a panel (2) so as to make it plastically deformable;
- setting up the panel (2) over a mould (1) in sealing relation therewith, in which an inner wall (11) defines a cavity (12);
- evacuating the air from the cavity (12) so as to deform the panel (2) adhering to the wall (11), wherein the evacuation of the air from the cavity occurs at least partially through capillary passages (7) which are on the inner wall (11), having such a dimension as to prevent substantially penetration into themselves of thermoformable material of the panel, **characterized in that** on the wall (11) there are ribs (15) and the capillar passages (7) are formed on the top of the ribs (15).

2. Method according to claim 1, wherein the air is evacuated creating a vacuum in the cavity (12) of the mould.

3. Method according to claim 2, wherein the air is evacuated applying a vacuum pressure within 0,01 and 1,93 mbar.

4. Method according to claim 3, wherein the vacuum pressure is within 0,96 and 0,98 mbar.

5. Method according to any of the preceding claims, used for making finished pieces with goffered surfaces.

6. Mould for carrying out the method according to any of the preceding claims, comprising an inner cavity (12), a wall (11) which defines such a cavity, at least a first aspiration duct (6) for evacuating the air from the cavity, a plurality of capillar passages (7) on the inner cavity (11), which put in fluid communication the cavity (12) with the aspiration duct (6) for evacuating the air from the mould, **characterized in that** on the wall (11) there are ribs (15) and the capillar passages (7) are formed on the top of the ribs (15).

7. Mould according to claim 7, wherein the ribs (15) have a solid geometric shape such as truncated cone or truncated pyramid, spherical cap, parallelepiped or similar.

8. Mould according to any of the claims from 6 to 7, wherein the capillar passages (7) have depth (P) greater than width (L).

9. Mould according to any of the preceding claims 6-8, wherein the capillar passages (7) have dimensions of width (L) and depth (P) variable from hundredth of a millimeter to a few tenth of a millimeter.

10. Mould according to any of the preceding claims 6-9, wherein the capillar passages (7) are obtained by ablation with a laser beam .

11. Mould according to any of the preceding claims 6-10, comprising heating means within itself.

12. Mould according to any of the preceding claims 6-11, comprising a counter-mould adapted to be juxtaposed for forming an interposed panel.

## Patentansprüche

1. Ein Verfahren zum Formen von Platten (2) aus thermoplastischem Material, aufweisend die Schritte:
- Aufwärmen einer Platte (2), um sie plastisch verformbar zu machen;
- Arrangieren der Platte (2) über eine Form (1) in dichtender Verbindung dazu, in welcher eine innere Wand (11) einen Hohlraum (12) definiert;
- Evakuieren der Luft aus dem Hohlraum (12), um die Platte (2) an der Wand (11) haftend zu verformen, wobei die Evakuierung der Luft aus dem Hohlraum zumindest teilweise durch kapillare Durchgänge (7) erfolgt, welche sich an der inneren Wand (11) befinden und eine derartige Größe haben, dass im Wesentlichen das Eindringen von thermoplastischem Material in sie selber verhindert wird,
**dadurch gekennzeichnet, dass**
sich an der Wand (11) Rippen (15) befinden, und
the kapillaren Durchgänge (7) oben auf den Rippen (15) gebildet sind.

2. Das Verfahren nach Anspruch 1, wobei die Luft evakuiert wird, während ein Vakuum in dem Hohlraum (12) der Form erzeugt wird.

3. Das Verfahren nach Anspruch 2, wobei die Luft evakuiert wird, während ein Vakuumdruck zwischen 0,01 und 1,93 mbar angelegt wird.

4. Das Verfahren nach Anspruch 3, wobei der Vakuumdruck zwischen 0,96 und 0,98 mbar liegt.

5. Das Verfahren nach einem der vorangegangenen Ansprüche, angewandet zum Herstellen eines fertigen Stücks mit geprägten Oberflächen.

6. Eine Form zum Ausführen des Verfahrens nach einem der vorangegangenen Ansprüche, aufweisend einen inneren Hohlraum (12), eine Wand (11), welche solch einen Hohlraum definiert, zumindest einen ersten Aspirationskanal (6) zum Evakuieren der Luft aus dem Hohlraum, eine Vielzahl von kapillaren Durchgängen (7) an dem inneren Hohlraum (11), welche zum Evakuieren der Luft aus der Form den Hohlraum (12) in fluide Verbindung mit dem Aspirationskanal bringen,
**dadurch gekennzeichnet, dass**
sich an der Wand (11) Rippen (15) befinden, und
die kapillaren Durchgänge (7) oben auf den Rippen (15) gebildet sind.

7. Die Form nach Anspruch 6, wobei die Rippen (15) eine feste Gestalt eines geometrischen Körpers haben, beispielsweise eines Kegelstumpfs, eines Pyramidenstumpfs, einer Kalotte, eines Parallelepipeds, oder ähnlichem.

8. Die Form nach einem der Ansprüche 6 bis 7, wobei die kapillaren Durchgänge (7) eine größere Tiefe (P) als Weite (L) haben.

9. Die Form nach einem der vorangegangenen Ansprüche 6-8, wobei die kapillaren Durchgänge (7) Größen von Weite (L) und Tiefe (P) haben, die von einem Hundertstel eines Millimeters bis zu einigen Zehnteln eines Millimeters variabel sind.

10. Die Form nach einem der vorangegangenen Ansprüche 6-9, wobei die kapillaren Durchgänge (7) durch Abtragung mit einem Laserstrahl erhalten werden.

11. Die Form nach einem der vorangegangenen Ansprüche 6-10, die in sich selber Aufwärmmittel aufweist.

12. Die Form nach einem der vorangegangenen Ansprüche 6-11, aufweisend eine Gegenform, die angepasst ist, um zum Bilden einer dazwischengestellten Platte danebengestellt zu werden.

## Revendications

1. Procédé de moulage de panneaux (2) de matériau thermoformable, comprenant les étapes suivantes :
- Chauffage d'un panneau (2) de manière à le rendre plastiquement déformable ;
- La mise en place du panneau (2) sur un moule (1) en relation étanche avec celui-ci, dans lequel une paroi intérieure (11) définit une cavité (12) ;
- Évacuation de l'air de la cavité (12) de manière à déformer le panneau (2) adhérant à la paroi (11), dans lequel l'évacuation de l'air de la cavité se produit au moins partiellement à travers des passages capillaires (7) qui se trouvent sur la paroi intérieure (11), ayant une dimension permettant d'empêcher sensiblement la pénétration du matériau thermoformable du panneau dans ces passages capillaires ;
**caractérisé en ce que**, sur la paroi (11) se trouvent des nervures (15) et les passages capillaires (7) sont formés sur la partie supérieure des nervures (15).

2. Procédé selon la revendication 1, dans lequel l'air est évacué créant ainsi un vide dans la cavité (12) du moule.

3. Procédé selon la revendication 2, dans lequel l'air est évacué créant une pression négative à l'intérieur entre 0.01 et 1.93 mbar.

4. Procédé selon la revendication 3, dans lequel la pression négative est de 0.96 à 0.98 mbar.

5. Procédé selon l'une quelconque des revendications précédentes, utilisé pour la fabrication de finition gaufrée des pièces.

6. Moule pour la réalisation du procédé selon l'une quelconque des revendications précédentes, comprenant une cavité interne (12), une paroi (11) qui définit ladite cavité, au moins un premier conduit d'aspiration (6) pour évacuer l'air de la cavité, une pluralité de passages capillaires (7) sur la cavité interne (11), qui mettent en communication de fluide la cavité (12) et le conduit d'aspiration (6) afin d'évacuer l'air hors du moule, **caractérisé en ce que** sur la paroi (11) se trouvent des nervures (15) et les passages capillaires (7) sont formés sur la partie supérieure des nervures (15).

7. Moule selon la revendication 6, dans lequel les nervures (15) ont une forme géométrique solide comme un tronc de cône ou une pyramide tronquée, une calotte sphérique, un parallélépipède ou similaire.

8. Moule selon l'une quelconque des revendications 6 à 7, dans lequel les passages capillaires (7) présentent une profondeur (P) plus grande que la largeur (L).

9. Moule selon l'une quelconque des précédentes revendications 6 à 8, dans lequel les passages capillaires (7) ont une largeur (L) et une profondeur (P) variables de centièmes de millimètre à quelques dixièmes de millimètres.

10. Moule selon l'une quelconque des revendications précédentes, 6 à 9, dans lequel les passages capillaires (7) sont obtenus par ablation à l'aide d'un faisceau laser.

11. Moule selon l'une quelconque des revendications précédentes 6 à 10, comprenant des moyens de chauffage intérieurs.

12. Moule selon l'une quelconque des revendications précédentes 6 à 11, comprenant un contre-moule adapté pour être juxtaposé et former un panneau interposé.
